# EUROPEAN PATENT APPLICATION

(11) **EP 2 658 140 A1**
(43) Date of publication of application: **30.10.2013**
(21) Application number: 13178056.1
(22) Date of filing: 01.06.2005
(51) Int. Cl.: H04B 7/005, H04W 52/32

(54) **Methods and system for managing minimum power of forward shared channel in trunking communication system**

(30) Priority: 28.06.2004 CN 200410059472
(62) Divisional of application: 05752300.3
(71) Applicant: Huawei Technologies Co., Ltd., Longgang District, Shenzhen Guangdong 518129 (CN)
(72) Inventor: WANG, Qiang, 518129 Shenzhen (CN)
(74) Representative: Thun, Clemens

(57) **Abstract**

A method for managing the minimum power of a forward shared channel in a trunking communication system includes: when a subscriber joins or quits a group call in a sector, one CE of the group call in the sector has the MinGainRatio identical to SYS_MIN_GAIN_RATIO of the forward shared channel, and other CEs have the MinGainRatios whose values are the minimal values that are able to be set to the CEs, such as a value equal to or approaching to zero. In this way, it is possible to guarantee that the signal power summed by the transmit powers of the CEs corresponding to the subscribers of the group call in the sector may not be greater than the power required by the terminal having highest requirement for the receiving power in the group, which decreases the system forward load and interference, and improves the system capacity.

## Description

### Field of the Invention

The present invention relates to the Code Division Multiple Access (CDMA) technology, and more particularly, to a CDMA-based trunking communication system.

### Background of the Invention

In a CDMA-based trunking communication system, trunking services for subscribers in the same group call of the sector are implemented by sharing a forward traffic channel. That is, the trunking system allocates a forward shared channel to all subscribers in the same group call of the sector, and the forward shared channel is used to broadcast voice services to these subscribers.

The forward shared channel is implemented in a dedicated channel sharing mode. The forward shared channel is a logical channel set by the trunking system to all subscribers in the same group call of the sector. In fact, the trunking system allocates a Channel Element (CE) to each of these subscribers as a physical channel to send forward traffic channel signals to corresponding subscribers of the group. Since the CEs send the same forward traffic channel signals and have the same channel parameters including WALSH code, long mask code, frame offsets, etc., all the CEs may be regarded, logically, as one forward shared channel.

In the dedicated channel sharing mode, for the transmit power control of a CE, the system assigns power parameters to the CE allocated to a subscriber of a group call in a sector. During a group call establishment, the system may assign a minimum transmit power ratio (MinGainRatio) and a maximum transmit power ratio (MaxGainRatio) to a CE according to the intensity of the signal received by a terminal of the subscriber corresponding to the CE. The MinGainRatio is used for restricting the CE minimum transmit power. In service implementation, the ratio of the minimum transmit power of the CE to the total power of the forward shared channel is desired not to be less than the value of the MinGainRatio, to ensure a basic power for the terminal of the subscriber corresponding to the CE and to guarantee the communication quality. The MaxGainRatio is used for restricting the maximum transmit power of the CE. In service implementation, the ratio of the maximum transmit power of the CE to the total power of the forward shared channel is desired not to be greater than the value of the MaxGainRatio, to avoid the over usage of the system resources and the increase of the system load due to the transmit power of the CE.

As can be seen from the above description, the solution for managing the minimum power of the forward shared channel is to assign a parameter MinGainRatio that is greater than zero for each CE in a sector and in a group. Different CEs allocated to different subscribers in the same group call of the sector transmit the forward traffic channel signals based on a power ratio that is greater than the assigned MinGainRatio. In this way, when subscribers in the sector continuously join the group call, i.e. when the amount of the subscribers in the sector and in the group is increased, the amount of the CEs corresponding to the subscribers is increased accordingly, which makes the signal power summed by transmit powers of all CEs increscent continuously. However, for the terminal of a subscriber in the sector and in the group, the signal received by the terminal is the signal transmitted based on the summed signal power, thus in actual conditions, it is OK when the summed signal power meets the power requirement of the subscriber whose terminal has highest requirement for the summed signal power. When trunking subscribers continuously join a group in a sector, the signal power summed by transmit powers of all CEs is continuously increased, thus the summed signal power may be greater than the power required by the terminal having highest requirement, and even may be greater than the maximum power of the forward shared channel set by the system, which wastes the forward power, decreases the system capacity and increases the self-interference.

### Summary of the Invention

Embodiments of the present invention provide methods and a system for managing the minimum power of a forward shared channel in a trunking communication system. The methods and system provided in certain embodiments of the present invention may guarantee that when a subscriber in a sector joins a group call, the signal power summed by the transmit powers of the CEs corresponding to all subscribers in the sector and in the group may not be greater than the receiving power required by the terminal having highest requirement.

Also the methods and the system provided in certain embodiments of the present invention may guarantee that, when a subscriber in the sector quit the group call, the signal power summed by the transmitting powers of the CEs corresponding to all subscribers in the sector and in the group may not be greater than the receiving power required by the terminal having highest requirement for the receiving power.

A method for managing the minimum power of a forward share channel in a trunking communication system includes:
configuring a minimum transmit power ratio of a Channel Element (CE) corresponding to a subscriber of a group call in a sector to a minimum power ratio of a forward shared channel of the group call in the sector; and
configuring the minimum transmit power ratios of the CEs corresponding to other subscribers of the group call in the sector to minimal values that are able to be configured to the CEs.

A method for managing the minimum power of a forward share channel in a trunking communication system includes:
when a subscriber joins a group call in a sector,
configuring the minimum transmit power ratio of the Channel Element (CE) corresponding to said subscriber to a minimal value that is able to be set to the CE, if a minimum transmit power ratio of the CE corresponding to one of the subscribers of the group call in the sector is identical to the minimum power ratio of a forward shared channel of the group call in the sector;
configuring the minimum transmit power ratio of the CE corresponding to said subscriber to the minimum power ratio of said forward shared channel, if the minimum transmit power ratio of the CE corresponding to one of the subscribers is not identical to the minimum power ratio of said forward shared channel.

A method for managing the minimum power of a forward share channel in a trunking communication system includes:
selecting, when a subscriber quits a group call in a sector, one of the remained subscribers of the group call in the sector;
configuring a minimum transmit power ratio of the Channel Element (CE) corresponding to said selected subscriber to a minimum power ratio of a forward shared channel of the group call in the sector;
configuring the minimum transmit power ratios of the CEs of the subscribers of the group call in the sector other than said selected subscriber to minimal values that are able to be set to the CEs;
deleting the CE corresponding to the subscriber who quits the group call in the sector.

A trunking system for managing the minimum power of a forward share channel in a trunking communication system includes:
a first means for configuring a minimum transmit power ratio of a Channel Element (CE) corresponding to a subscriber of a group call in a sector to a minimum power ratio of a forward shared channel of the group call in the sector;
a second means for configuring the minimum transmit power ratios of the CEs corresponding to other subscribers of the group call in the sector to minimal values that are able to be configured to the CEs.

As can be seen from the above solutions for managing the minimum power of a forward shared channel in a trunking communication system in accordance with the embodiments of the present invention, one CE in the same group call of the sector has the MinGainRatio identical to the minimum power ratio (SYS_MIN_GAIN_RATIO) of the forward shared channel set by the system, and the other CEs have the MinGainRatios whose values are the minimal values that are able to be set to the CEs. In this way, it is possible to guarantee that the signal power summed by the transmit powers of the CEs corresponding to the subscribers of the group call in the sector may not be greater than the power required by the terminal having highest requirement in the group, while guaranteeing the communication quality of the group call, which saves the power, reduces the system forward load and interference, and improves the system capacity, reducing the operating cost and bringing greater economic benefit for operators.

### Brief Description of the Drawings

Figure 1 is a flowchart illustrating an example method for managing the minimum power of a forward shared channel when a trunking subscriber joins a group call of a sector in accordance with an embodiment of the present invention.
Figure 2 is a flowchart illustrating an example method for managing the minimum power of a forward shared channel when a trunking subscriber quits a group call of a sector according to an embodiment of the present invention.

### Detailed Description of Embodiments of the Invention

In certain embodiments of the present invention, the minimum power ratio (SYS_MIN_GAIN_RATIO) and the maximum power ratio of a forward shared channel is preset by the system administrator through operating the maintenance station according to the system capacity, rather than being assigned during a group call establishment. The minimum power ratio (SYS_MIN_GAIN_RATIO) and the maximum power ratio of the forward shared channel reflect the transmit power of the forward shared channel in practical service implementations required by the system. That is, during the group call establishment, the MinGainRatio allocated for a CE should confirm with the requirements of the SYS_MIN_GAIN_RATIO and the maximum power ratio of the forward shared channel preset by the system, to avoid the case that the summed signal power is greater than the receiving power required by the terminal having highest requirement for the receiving power, and even is greater than the maximum power of the forward shared channel set by the system.

Embodiments of the present invention provide a method for managing the minimum power of a forward shared channel. When a subscriber joins or quits a group call in a sector, one CE in the same group call of the sector has the MinGainRatio identical to the minimum power ratio (SYS_MIN_GAIN_RATIO) of the forward shared channel set by the system, and the other CEs have the MinGainRatios whose values are the minimal values that are able to be set to the CEs, such as a value equal to or approaching to zero.

In order to make the object, technical solution and merits of some embodiments of this invention clearer, a further detailed description of certain embodiments of this invention is hereinafter given with reference to the accompanying drawings and embodiments.

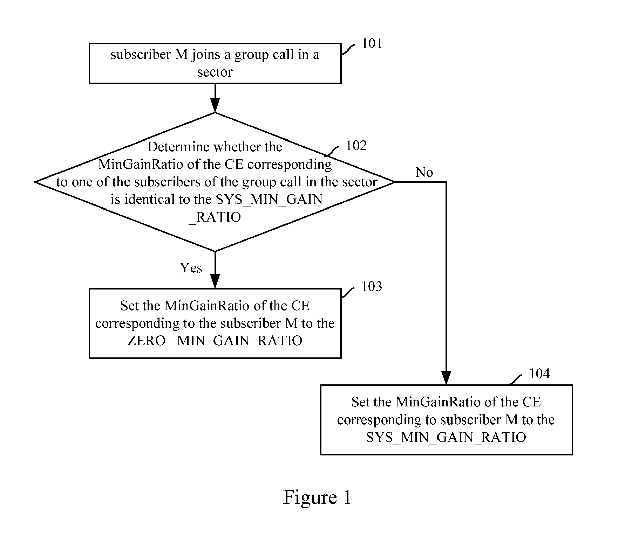

Figure 1 shows a flowchart illustrating an example method for managing the minimum power of a forward shared channel when a subscriber joins a group call of a sector in accordance with an embodiment of the present invention. Referring to Figure 1, when any subscriber joins the group call of the sector, the process of managing the minimum power of the forward shared channel in accordance with an embodiment of the present invention may include the followings:
Step 101: a subscriber, for example subscriber M, joins the group call of the sector. The subscriber M may join the group call of the sector during the group call establishment, or after the group call is established, i.e. during the communication of the group call.
Step 102: determine whether there is a CE corresponding to a subscriber in the group call of the sector has the minimum transmit power ratio MinGainRatio identical to the minimum power ratio (SYS_MIN_GAIN_RATIO) of the forward shared channel preset by the system. If a CE is found, Step 103 is performed; otherwise, Step 104 is performed.
Step 103: assign the MinGainRatio of the CE corresponding to subscriber M to the minimum power ratio (ZERO_MIN_GAIN_RATIO) whose value is the minimal value that is able to be set to the CE.

The value of the ZERO_MIN_GAIN_RATIO is the minimum power ratio that is able to be set to the CE corresponding to subscriber M, such as a power ratio that is approaching to or equal to zero.

Step 104: assign the MinGainRatio of the CE corresponding to subscriber M to the SYS_MIN_GAIN_RATIO of the forward shared channel preset by the system.

Thereby, there is one CE in the same group call of the sector has the MinGainRatio substantially identical to the minimum power ratio (SYS_MIN_GAIN_RATIO) of the forward shared channel set by the system, and the other CEs have the MinGainRatios whose values are the minimal values that are able to be set to the CEs, such as a value equal to or approaching to zero. In this way, when subscribers join or quit a group call of a sector, it is possible to guarantee that the signal power summed by the transmit powers of the CEs corresponding to the subscribers of the group call in the sector may not be greater than the power required by the terminal having highest requirement for the receiving power in the group, thus save the power.

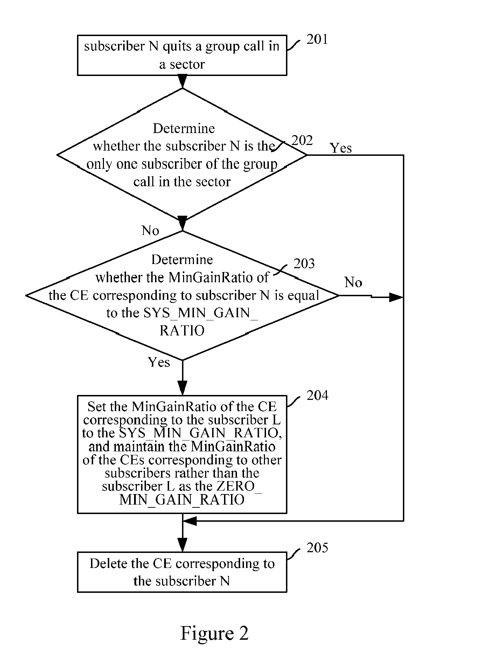

In accordance with the example method illustrated in figure 1, the MinGainRatio of the CE corresponding to a subscriber, e.g. subscriber N, of the group call in the sector is equal to the minimum power ratio (SYS_MIN_GAIN_RATIO) of the forward shared channel preset by the system. When the subscriber N quits the group call of the sector for some reasons, since the MinGainRatio of other CEs of the group call in the sector are the minimum power ratio (ZERO_MIN_GAIN_RATIO) that is equal to or approach to 0, it is possible to induce that the signal power summed by the transmit powers of the CEs having the minimum power ratio (ZERO_MIN_GAIN_RATIO) is unable to meet the requirement of the minimum power ratio of the forward shared channel after subscriber N quits the group call, which may lead to decrease communication quality. Therefore, in actual conditions, the MinGainRatio of one CE of the remained subscribers of group call in the sector should be equal to the minimum power ratio (SYS_MIN_GAIN_RATIO) of the forward shared channel set by the system in order to guarantee the basic power of the forward shared channel. In this case, the solution in accordance with the present invention is as shown in Figure 2, and may include the following steps:
Step 201: a subscriber N of the group call in the sector quits the group call.
Step 202: determine whether the subscriber N is the only one subscriber of the group call in the sector. If the subscriber N is the only one subscriber of the group call in the sector, Step 205 is performed; otherwise, Step 203 is performed.
Step 203: acquire the minimum transmit power ratio (MinGainRatio) of the CE corresponding to the subscriber N, and determine whether the MinGainRatio is equal to the minimum power ratio SYS_MIN_GAIN_RATIO of the forward shared channel preset by the system. If the MinGainRatio of the CE corresponding to the subscriber N is equal to the minimum power ratio SYS_MIN_GAIN_RATIO of the forward shared channel, Step 204 is performed; otherwise, Step 205 is performed.

The Steps 202 and 203 are the example processes of determining whether it is needed to set the minimum power ratios of the CEs of the remained subscribers of the group call in the sector when the subscriber N quits the group call.

Alternatively, in actual conditions, the process described in Step 203 may also be performed before the process described in Step 202. That is, after Step 201, determine whether the acquired minimum transmit power ratio MinGainRatio of the CE corresponding to subscriber N is equal to the minimum power ratio SYS_MIN_GAIN_RATIO of the forward shared channel preset by the system. If the MinGainRatio of the CE is not identical to the minimum power ratio SYS_MIN_GAIN_RATIO of the forward shared channel, Step 205 may be performed. If the MinGainRatio of the CE is identical to the minimum power ratio SYS_MIN_GAIN_RATIO of the forward shared channel, determine whether the subscriber N is the only subscriber of the group call in the sector. If the subscriber N is not the only subscriber of the group call in the sector, Step 204 may be performed; otherwise, Step 205 may be performed. Whether Step 202 or 203 is first performed based on the data structure of the system. For example, if it is easy to acquire the minimum transmit power ratio MinGainRatio of the CE corresponding to the subscriber N, Step 203 may be performed first; if it is easy to determine whether the subscriber N is the only subscriber of the group call in the sector, Step 202 may be performed first.

Step 204: select any of the remained subscribers of the group call in the sector, e.g. subscriber L, set the minimum transmit power ratio MinGainRatio of the CE corresponding to the subscriber L to the minimum power ratio SYS_MIN_GAIN_RATIO preset by the system, and maintain the minimum transmit power ratios MinGainRatios of the CEs corresponding to other subscribers apart from the subscriber L of the group call in the sector as ZERO_MIN_GAIN_RATIO that is approach to or equal to 0;

Step 205: delete the CE corresponding to the subscriber N.

The process of deleting the CE corresponding to the subscriber N may include sending a stop-working signal by the system to the CE corresponding to the subscriber N. After receiving the stop-working signal, the CE stops working. In this way, the CE corresponding to the subscriber N is deleted logically.

Though the present invention has been illustrated and described by some preferred embodiments, those skilled in the art should understand that various changes may be made in form and detail without departing from the scope of the present invention and therefore should be covered in the protection scope of the present invention assigned by the appended claims.

## Claims

1. A method for managing the minimum power of a forward shared channel in a trunking communication system, **characterized in** comprising:
determining (102) whether there is a Channel Element, CE, corresponding to a subscriber in a group call of a sector having a minimum transmit power ratio identical to a minimum power ratio of a forward shared channel preset by a system when a further subscriber joins (101) the group call of the sector;
configuring (104) a minimum transmit power ratio of a CE corresponding to the further subscriber of the group call of the sector to the minimum power ratio of the forward shared channel preset by the system if there is no CE corresponding to a subscriber in the group call of the sector having the minimum transmit power ratio identical to the minimum power ratio of the forward shared channel preset by the system; and
configuring (103) the minimum transmit power ratio of the CE corresponding to the further subscriber of the group call in the sector to a minimal value that can be set for the CE corresponding to the further subscriber of the group call in the sector if there is a CE corresponding to a subscriber in the group call of the sector having the minimum transmit power ratio identical to the minimum power ratio of the forward shared channel preset by the system.

2. The method of Claim1, further comprising:
determining (202) whether a subscriber who quits the group call is the only one subscriber of the group call in the sector; and
deleting (205) an CE corresponding to the subscriber who quits the group call if the subscriber who quits the group call is the only one subscriber of the group call in the sector.

3. The method of Claim 1, further comprising:
determining (202) whether a subscriber who quits the group call is the only one subscriber of the group call in the sector;
determining (203) whether a minimum transmit power ratio of a CE corresponding to said subscriber who quits the group call is equal to the minimum power ratio of the forward shared channel preset by the system if the subscriber who quits the group call is not the only one subscriber of the group call in the sector; and
deleting (205) an CE corresponding to the subscriber who quits the group call in the sector if the minimum transmit power ratio of the CE corresponding to said subscriber who quits the group call is not equal to the minimum power ratio of the forward shared channel preset by the system.

4. The method of Claim 1, further comprising:
determining (202) whether a subscriber who quits the group call is the only one subscriber of the group call in the sector;
determining (203) whether a minimum transmit power ratio of a CE corresponding to said subscriber who quits the group call is equal to the minimum power ratio of the forward shared channel preset by the system if the subscriber who quits the group call is not the only one subscriber of the group call in the sector;
selecting (204), if the minimum transmit power ratio of the CE corresponding to said subscriber who quits the group call is equal to the minimum power ratio of the forward shared channel preset by the system, any one of remained subscribers of the group call in the sector;
configuring (204) a minimum transmit power ratio of an CE corresponding to a selected subscriber to the minimum power ratio preset by the system; and
maintaining (204) minimum transmit power ratios of CEs corresponding to other subscribers apart from the selected subscriber of the group call in the sector as said minimal value that can be set.

5. The method of Claim 2 or 3, wherein before the deleting the CE corresponding to the subscriber who quits the group call in the sector, the method further comprises:
sending a stop-working signal to the CE corresponding to the subscriber who quits the group call in the sector to stop the CE from working.

6. The method of any one of claims 1 to 5, wherein the minimum power ratio of the forward shared channel is a SYS_MIN_GAIN_RATIO of the forward shared channel preset by the system, and the minimal value that can be set is a ZERO_ MIN_GAIN_RATIO.

7. The method of any one of Claims 1-6, wherein said minimal value that can be set is a value equal to or approaching to 0.

8. A trunking system for managing the minimum power of a forward shared channel in a trunking communication system, **characterized in** comprising:
means for determining whether there is a Channel Element, CE, corresponding to a subscriber in a group call of a sector haing a minimum transmit power ratio identical to a minimum power ratio of a forward shared channel preset by a system when a further subscriber joins the group call of the sector;
means for configuring a minimum transmit power ratio of a CE corresponding to the further subscriber of the group call of the sector to the minimum power ratio of the forward shared channel preset by the system if there is no CE corresponding to a subscriber in the group call of the sector having the minimum transmit power ratio identical to the minimum power ratio of the forward shared channel preset by the system; and
means for configuring the minimum transmit power ratio of the CE corresponding to the further subscriber of the group call in the sector to a minimal value that can be set for the CE corresponding to the further subscriber of the group call in the sector if there is a CE corresponding to a subscriber in the group call of the sector having the minimum transmit power ratio identical to the minimum power ratio of the forward shared channel preset by the system.

9. The system of Claim 8, further comprising:
means for determining whether a subscriber who quits the group call is the only one subscriber of the group call in the sector; and
means for deleting an CE corresponding to the subscriber who quits the group call if the subscriber who quits the group call is the only one subscriber of the group call in the sector.

10. The system of Claim 8, further comprising:
means for determining whether a subscriber who quits the group call is the only one subscriber of the group call in the sector;
means for determining whether a minimum transmit power ratio of a CE corresponding to said subscriber who quits the group call is equal to the minimum power ratio of the forward shared channel preset by the system if the subscriber who quits the group call is not the only one subscriber of the group call in the sector; and
means for deleting an CE corresponding to the subscriber who quits the group call in the sector if the minimum transmit power ratio of the CE corresponding to said subscriber who quits the group call is not equal to the minimum power ratio of the forward shared channel preset by the system.

11. The system of Claim 8, further comprising:
means for determining whether a subscriber who quits the group call is the only one subscriber of the group call in the sector;
means for determining whether a minimum transmit power ratio of a CE corresponding to said subscriber who quits the group call is equal to the minimum power ratio of the forward shared channel preset by the system if the subscriber who quits the group call is not the only one subscriber of the group call in the sector;
means for selecting, if the minimum transmit power ratio of the CE corresponding to said subscriber who quits the group call is equal to the minimum power ratio of the forward shared channel preset by the system, any one of remained subscribers of the group call in the sector;
means for configuring a minimum transmit power ratio of an CE corresponding to a selected subscriber to the minimum power ratio preset by the system; and
means for maintaining minimum transmit power ratios of CEs corresponding to other subscribers apart from the selected subscriber of the group call in the sector as said minimal value that can be set.

12. The system of Claim 9 or 10, further comprising:
means for sending a stop-working signal to the CE corresponding to the subscriber who quits the group call in the sector to stop the CE from working.

13. The system of any one of claims 8 to 12, wherein the minimum power ratio of the forward shared channel is a SYS_MIN_GAIN_RATIO of the forward shared channel preset by the system, and the minimal value that can be set is a ZERO_ MIN-GAIN-RATIO.

14. The system of any one of Claims 8-13, wherein said minimal value that can be set is a value equal to or approaching to 0.
